# EUROPEAN PATENT APPLICATION

(11) **EP 3 150 813 A1**
(43) Date of publication of application: **05.04.2017**
(21) Application number: 15306541.2
(22) Date of filing: 30.09.2015
(51) Int. Cl.: F01N 3/20

(54) **FEED LINE SYSTEM FOR A VEHICLE SYSTEM**

(71) Applicant: Plastic Omnium Advanced Innovation and Research, 1120 Bruxelles (BE)
(72) Inventor: MONGE-BONINI, Beatriz, B-1040 BRUSSELS (BE); VAN SCHAFTINGEN, Jules-Joseph, B-1300 WAVRE (BE); DE MAN, Pierre, B-1090 BRUSSELS (BE); DOUGNIER, François, B-3190 BOORTMEERBEEK (BE)
(74) Representative: de la Bigne, Guillaume Michel Marie

(57) **Abstract**

It is proposed a feed line system comprising a line (3) adapted to convey ammonia solution stored in a container (1) mountable on a vehicle to a vehicle consuming unit (2). The line comprises at least one residence time chamber (4) which is arranged between the container (1) and the vehicle consuming unit (2). Said residence time chamber is arranged to be in thermal communication with a heat source on-board the vehicle and is configured such that the heat source has sufficient time to act on ammonia salts (i.e. precipitates) or to prevent formation of ammonia salts in the ammonia solution.

## Description

### Field of Invention

The invention relates to a feed line system for a vehicle system. More precisely the invention relates to a feed line system for conveying ammonia solution on board a vehicle.

More precisely it relates to a feed line system for conveying ammonia solution to an ammonia-consuming unit. For example, the ammonia-consuming unit may be an exhaust system which requires ammonia in order to carry out a chemical process for NOx reduction. The ammonia-consuming unit may also be a fuel cell system or ammonia-hydrogen conversion reformer.

The invention also pertains to a vehicle system provided with such a feed line system.

### Background

There exist prior art systems for generating and conveying ammonia solution to a consuming unit mounted on board a vehicle. For example, such systems are described in patent applications EP2846011 and PCT/EP/2015055126, in the name of the Applicant, the content of which is included herein by reference.

Generally, such systems comprise a container for the storage of ammonia solution and a line for conveying the ammonia solution to an ammonia consuming unit, for example the exhaust line of a vehicle.

Generally, this ammonia solution is injected in the exhaust line by means of an injector. In cold conditions, ammonia salts can appear in the solution. These ammonia salts can cause clogging of the injector. This deteriorates the performance of the system.

### Summary

An object of the present invention is to solve the above-mentioned problem by proposing a feed line system comprising a line adapted to convey ammonia solution stored in a container mountable on a vehicle to a vehicle consuming unit. The line comprises at least one residence time chamber which is arranged between the container and the vehicle consuming unit. Said residence time chamber is arranged to be in thermal communication with a heat source on-board the vehicle and is configured such that the heat source has sufficient time to act on ammonia salts (i.e. precipitates) or to prevent formation of ammonia salts in the ammonia solution.

Thus it is proposed a vehicle feed line equipped with one or several residence time chamber(s) configured to retain the ammonia solution for a pre-determined period of time i.e. there is sufficient residence time for heating up the ammonia solution traveling through the residence time chamber. This allows partial or total dissolution of ammonia salts (i.e. precipitates), which are present in the ammonia solution, before the latter is provided to the vehicle consuming unit, for instance after vehicle is stopped and cooled down. Such heating also prevents the formation of ammonia salts in the ammonia solution which is stored in the residence time chamber, for example when the consumption of ammonia solution is very low.

In the present document, the term "ammonia solution" is understood to mean a mixture which comprises ammonia, water and carbon dioxide and other compounds than ammonia (hydrated ammonia / ammonium hydroxide), and eventually other effluents or impurities such as ammonium hydrogen carbonate precipitate and ammonium bicarbonate precipitate which are formed at low temperature, generally at a temperature lower than 20 °C.

E.g., if the mixture is obtained by decomposition of an aqueous urea solution then the ammonia solution may also comprise a residue of an ammonia precursor (i.e. a portion of the ammonia precursor that has not been decomposed) and other compositions.

Said line is arranged between the container and the vehicle consuming unit. The container is in fluid communication with the vehicle consuming unit through the line.

The line can be made of thermoplastic, preferably of polyamide. Such material is malleable, flexible, weldable, and mechanically resistant. These properties allow said residence time chamber to be integrated easily in the line. The line can also be made of metal, for instance stainless steel.

In a particular embodiment, said at least one residence time chamber is made in one piece with the line. In other words, the residence time chamber is an integral part of the line, preferably made of the same material. In a first advantageous embodiment, the residence time chamber can be formed by a portion of the line wound in a coil or loop shape. This first embodiment is easy to implement. In a second advantageous embodiment, the residence time chamber can be formed by a portion of the line which has an enlarged cross section compared to the remainder of the line. This second embodiment is easy to manufacture. For example, the line and its residence time chamber(s) can be manufactured by using blow molding or injection molding process.

In another particular embodiment, said at least one residence time chamber is a separate and distinct element from the line. In an advantageous embodiment the residence time chamber can be connected to the line by any adapted means of fixation. Such means of fixation can be welding devices, quick connect systems, mechanical fixations, such that hose clamps, or any other fixation means known by the state-of-the-art. The residence time chamber can be made of the same material as the line, or can be made with another material. For instance, the residence time chamber can be made of metal, while the line is made of polyamide.

Such materials are also impermeable, and are well adapted for the application of the invention.

The residence time can be pre-adjusted so as to obtain partial or total dissolution of ammonia salts in the ammonia solution and to prevent formation of such ammonia salts.

The residence time of ammonia solution in the residence time chamber of the present invention is higher than the residence time of ammonia solution in another portion of the line comprised between two other points of the line which are separated by same predetermined distance, i.e. the distance separating the inlet and the outlet of the residence time chamber. The residence time of ammonia solution in one residence time chamber of the line is defined by the average amount of time that ammonia solution spends in said chamber. The residence time begins from the moment that a particle of ammonia solution enters said chamber and ends at the moment that the same particle of ammonia solution leaves said chamber. In other words, the residence time corresponds to the time that, at a constant flow rate of ammonia solution, a particle of ammonia solution spends to pass from the inlet of the chamber to the outlet of the chamber.

The chamber of the invention has a residence time at least 2 times larger than the residence time of another portion of the line being separated by same predetermined distance, i.e. the distance separating the inlet and the outlet of the residence time chamber. Preferably the chamber has a residence time 10 times larger and more preferably 40 times larger.

Thus, if the size of the chamber is changed, the residence time of the chamber will be changed as well. The larger the internal volume of the chamber, the larger the residence time, assuming the inflow and outflow rates are held constant. Inversely, the smaller the internal volume of the chamber, the shorter the residence time will be, again assuming steady-state conditions.

In other words, the residence time of the ammonia solution is directly proportional to the internal volume of the chamber that the ammonia solution is traversing through and is indirectly proportional to the flow rate of the ammonia solution inside said chamber. Thus, at constant flow rate, the residence time of ammonia solution in said chamber is dependent of the volume of ammonia solution passing said chamber.

Thus, at a constant flow rate of ammonia solution, the residence time of said solution into the enlarged cross section chamber is augmented compared with that of another portion of the line comprised between two other points of the line being separated by same predetermined distance, i.e. the distance separating the inlet and the outlet of the residence time chamber.
In another particular embodiment, said residence time chamber is a tortuous pathway.
In such particular embodiments, the volume of said chamber is increased by augmenting the length of said chamber.
Thus, at a constant flow rate of ammonia solution, the residence time of said solution into said residence time chamber is increased compared with that of another portion of the line comprised between two other points of the line which are separated by same said predetermined distance, i.e. the distance separating the inlet and the outlet of the residence time chamber.

The residence time chamber of the invention is arranged to be in thermal communication with a heat source on-board the vehicle.

In a preferred embodiment, the heat source on-board the vehicle of the invention is an electrical heater. This means for heating converts electricity into heat through the process of resistive heating. Electric current passing through the ammonia solution encounters resistance, resulting in heating of ammonia solution.

The residence time chamber of the invention comprises a wall made of a material adapted to absorb heat present in the external environment of the line.
Heat present in the external environment of the line is heat coming from vehicle components of the system which release heat.
In a preferred embodiment, the heat source on-board the vehicle of the invention is heat coming from vehicle consuming unit.
Said vehicle consuming unit is selected from the group consisting of exhaust lines, ammonia fuel cells, ammonia hydrogen conversion reformers and solid oxide fuel cells.
A fuel cell in which embodiments of the invention may be used is disclosed e.g. in patent application WO2014096426 A1 published on 26 June 2014 in the name of the Applicant.
Such units work at a temperature comprised between 70°C to 800°C. They release and transfer by their structure thermal energy to the other vehicle system units which are located closely of said consuming unit.
Thus, the residence time chamber of the invention, which is located in very close proximity of the consuming unit, absorbs the heat released and transferred by said consuming unit by thermal conduction. Such heat is further transferred to ammonia solution during its passage in said chamber by thermal conduction.
The ammonia solution is also heated by the movement of the particles of the solution, namely by thermal convection. A phenomenon of thermal radiation could also occur.
The residence time chamber of the line of this particular embodiment presents the advantage to be directly heated by thermal energy delivered (i.e. available) by the vehicle consuming unit, thereby saving energy.
Such thermal coupling provides a sufficient temperature gradient of the ammonia solution to ensure a complete dissolution of ammonia salts present in the solution by thermal decomposition.
In this way, the thermal coupling between said chamber and said vehicle consuming unit ensures that no damage occurs to the vehicle system of the invention and also ensures the prompt availability of the ammonia solution for feeding of the vehicle consuming unit. The availability of ammonia for NOx removal or for fueling a fuel cell is therefore improved

In a particular embodiment, the distance between said residence time chamber and said vehicle consuming unit is ideally lower than 40 mm.
Thus, at such a distance, the thermal coupling between said units is particularly efficient.

Thus the residence time chamber of the invention is made of a material, which has the property to absorb heat coming from to the external environment of the line. This absorption occurs by thermal conduction.
The heat transfer is generated by the difference of temperature between the external environment and the material. The thermal energy absorbed by the material of said chamber causes the molecules in the material to move faster, thus increasing temperature. In a particular embodiment, the wall of said chamber is made of a specific heat absorber material such as surface treatments, fins, surfaces for additional heat recovery, color, or other surfaces known by the state-of-the-art.

In another embodiment, the surface of the chamber may additionally be covered by a thermic shield in order to prevent heat losses towards the external environment, which is colder than the residence time chamber of the invention at this moment, and ensure excellent thermal insulation of said chamber.
This thermic shield may be a metal sheet, an insulating layer, or any other heat-insulating elements known by the state-of-the-art.
The residence time chamber of the invention further comprises heat transfer means configured to transfer heat, present in the external environment of the line, which is warmer than the residence time chamber in thermal communication with a heat source at this moment, to said residence time chamber.
The thermal energy coming from the external environment of the line, absorbed by the material of said residence time chamber, is then transferred to ammonia solution by thermal conduction. The material of said chamber has the property to release the thermal energy previously absorbed. Heat spontaneously flows from a hotter to a colder body, which means from the material to the ammonia solution. Heat transfer occurs by means of molecular agitation within a material without any motion of the material as a whole.
Other heat transfer processes happen at the same time, such as thermal convection or radiation. Ammonia solution is heated by the movement of its particles.
Other heat transfer means than the material of the residence time chamber may be used. By heat transfer means, it should be understood any means which provides heat energy from a source of heat to a cold environment, such as heat pump.
Thus, by passing through the residence time chamber of the line, the flow of ammonia solution absorbs progressively heat energy generated and transferred by means for heating or heat transfer means or the combination of both means. In this way, ammonia solution is heated and reaches a temperature which allows the complete dissolution of ammonia salts formed into the solution at cold temperature or the prevention of the formation of such ammonia salts.
At the inlet of the residence time chamber of the invention, the temperature of the ammonia solution is at the ambient temperature of the system.
By passing through the residence time chamber of the invention, the temperature of ammonia solution is progressively increasing. A temperature gradient occurs by thermal coupling between the ammonia solution and means for heating or heat transfer means or the combination of both means. The heat transfer could take the form of thermal conduction, thermal convection or the combination of both.
At the outlet of said chamber, before being conveyed to the vehicle consuming unit, the flow of ammonia solution is at a temperature such that it allows the complete dissolution of ammonia salts formed into the solution at cold temperature, typically at a temperature below 20 °C.
For example, when the external temperature is at -15°C, the fact that the residence time of ammonia solution in residence time chamber, at a constant flow rate of the ammonia solution, is augmented compared to another portion of the line having same predetermined distance (i.e. the distance separating the inlet and the outlet of the residence time chamber), allows an increase of the ammonia solution temperature from -15°C to 20°C or more.

The residence time chamber according to the invention presents also the benefit to ensure the completion of the conversion of the residue of ammonia precursor, comprised in the ammonia solution, by passing said residence time chamber. Thus, the amount of ammonia precursor residues is significantly reduced as well as the associated risks.

All the advantageous effects of the invention are particularly efficient when only a small amount of ammonia solution of the ammonia solution stored into the container is passing through said chamber. Indeed heating a small amount of the solution is easier and faster than a bigger one.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates a first embodiment of a vehicle system with a feed line according to the present invention;
Figure 2a illustrates a second embodiment of a vehicle system with a feed line according to the present invention;
Figure 2b illustrates an embodiment of a residence time chamber forming loops around the consuming unit of the feed line of Figure 2a; and
Figure 3 illustrates a third embodiment of a vehicle system with a feed line according to the present invention.

### Description of embodiments

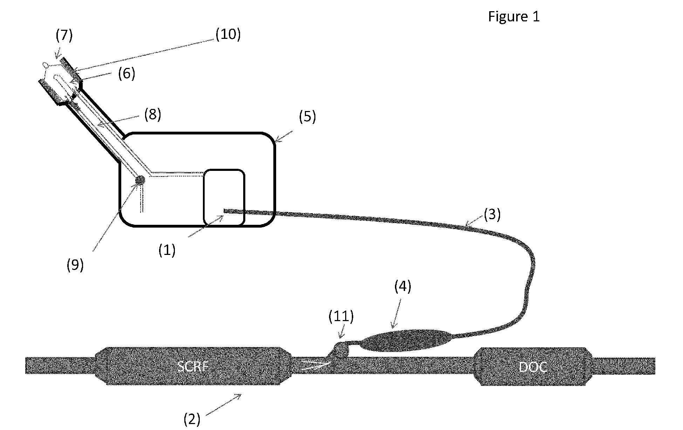

Figure 1 is a schematic view of a SCR system according to a first particular embodiment of the present invention.

As illustrated in the example of Figure 1, the vehicle system comprises:
- a container (1) (i.e. buffer tank) for the storage of ammonia solution;
- a vehicle consuming unit (2);
- a line (3) comprising one residence time chamber (4), arranged between said container (1) and consuming unit (2), said container (1) being in fluid communication with said vehicle consuming unit (2) through the line (3).

In a particular embodiment, the tank (5) stores an aqueous urea solution, for example AdBlue^{®} solution (commercial solution of urea).

In the example of Figure 1, the decomposition unit (6) can comprise enzyme retaining structures (7) containing a protein component or a protein sequence. Such protein component acts as a bio-agent. The protein component is adapted to decompose the urea stored in tank (5). More precisely, the protein component stored in the enzyme retaining structure (7) is adapted to convert the urea into, for example, an ammonia solution. For example, an enzyme, such as urease, can be used to decompose the urea. Advantageously, each enzyme retaining structure (7) is introduced through the filler pipe (8). In the example of Figure 1, the filler pipe (8) is a one piece hollow tube. The enzyme confined into a retaining structure is inserted into a housing constituting the decomposition unit. The decomposition unit is filled with the enzyme retaining structure for example through the urea solution tank refilling port. The decomposition unit has also two nipples that are penetrating inside the enzyme retaining structure when the retaining structure is put into place by sliding. The urea solution is then transferred to the decomposition unit by the fluid transfer device (FTD1) (9).

As illustrated, the decomposition unit (6) comprises a heater (10) adapted to thermally activate the protein component stored in the enzyme retaining structure (7). For example, the heater (10) is activated so as to initiate the decomposition of the urea solution into ammonia solution.

In a particular embodiment, the converted ammonia solution is stored in a Buffer tank (1). The solution is ready to be sent by an Ammonia solution Transfer Device (not represented) or by a pressurized gravity-driven system through a pressurized line to the ammonia injector at the exhaust line (2) via a line (3) made of thermoplastic, preferably of polyamide or metal.

As illustrated, the residence time chamber (4) of the line (3) is made in one piece with the line (3) and comprises means for heating said chamber (not represented). It could also be made in two pieces with two different materials, for instance the line in polyamide and the residence time chamber in metal, for instance stainless steel.

Said means for heating is an electrical heater (not represented) which converts electricity into heat through the process of resistive heating.

The residence time chamber (4) of the line (3) further comprises a section larger than the section of the line (3) at very close proximity of the exhaust line. It is composed by a material adapted to absorb heat generated and transferred by the exhaust system (2) once it is operating (the external environment of the line) by heat transfer means (not represented). Said chamber (4) is arranged such it is thermally coupled to said exhaust line (2).

Thus, during its passage into said chamber (4), ammonia solution is heated and reaches a sufficient temperature to dissolve all the ammonia salts (i.e. precipitates) contained inside. Ammonia solution exempt of ammonia salts is then injected (11) to the exhaust line (2). Thus a reliable NOx reduction process is ensured.

The residence time chamber (4) can also be thermally coupled to an ammonia-hydrogen conversion reformer (not represented) that subsequently communicates with a hydrogen fuel cell (not represented) where the hydrogen is then converted into a power source.

The residence time chamber (4) can also be thermally coupled to a reformer (not represented), which is a consuming unit working typically above 200°C.

The residence time chamber (4) can also be thermally coupled to an ammonia fuel cell (not represented).

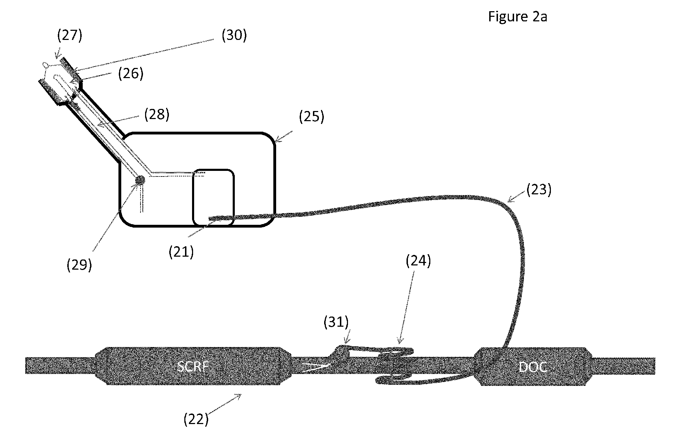

Figure 2a is a schematic view of a SCR system according to a second particular embodiment of the present invention.

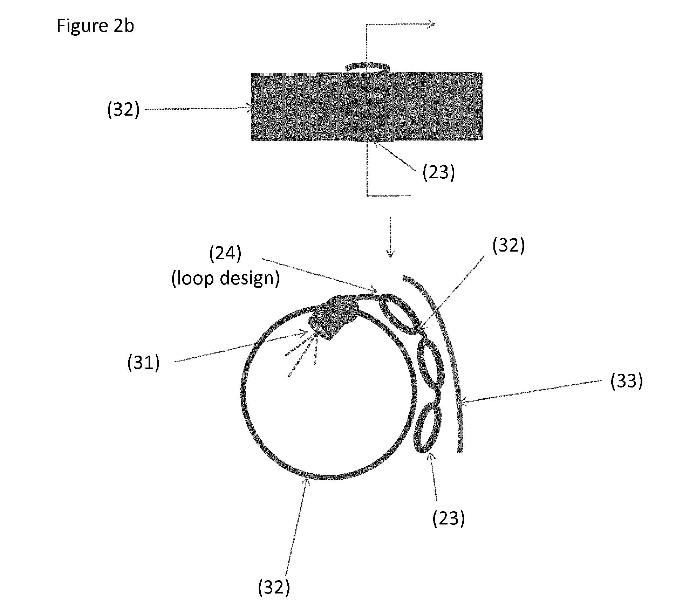

As illustrated in the example of Figure 2, the system comprises:
- a container (21) (i.e. buffer tank) for the storage of ammonia solution;
- a consuming unit (22);
- a line (23) comprising one residence time chamber (24), arranged between said container (21) and consuming unit (22), said container (21) being in fluid communication with said vehicle consuming unit (22) through the line (23).

In a particular embodiment, the tank (25) stores an aqueous urea solution, for example AdBlue^{®} solution (commercial solution of urea).

In the example of Figure 2a, the decomposition unit (26) can comprise enzyme retaining structures (27) containing a protein component or a protein sequence. Such protein component acts as a bio-agent. The protein component is adapted to decompose the urea stored in tank (25). More precisely, the protein component stored in the enzyme retaining structure (27) is adapted to convert the urea into, for example, an ammonia solution. For example, an enzyme, such as urease, can be used to decompose the urea. Advantageously, each enzyme retaining structure (27) is introduced through the filler pipe (28). In the example of Figure 2a, the filler pipe (28) is a one piece hollow tube. The enzyme confined into a retaining structure is inserted into a housing constituting the decomposition unit. The decomposition unit is filled with the enzyme retaining structure for example through the urea solution tank refilling port. The decomposition unit has also two nipples that are penetrating inside the enzyme retaining structure when the retaining structure is put into place by sliding. The urea solution is then transferred to the decomposition unit by the fluid transfer device (FTD1) (29). As illustrated, the decomposition unit (26) comprises a heater (30) adapted to thermally activate the protein component stored in the enzyme retaining structure (27). For example, the heater (30) is activated so as to initiate the decomposition of the urea solution into ammonia solution.
In a particular embodiment, the converted ammonia solution is stored in a Buffer tank (21). The solution is ready to be sent by an Ammonia solution Transfer Device (not represented) or by a pressurized gravity-driven system through a pressurized line to the ammonia injector at the exhaust line (22) via a line (23) made of thermoplastic, preferably of polyamide or in metal such as stainless steel.

As illustrated, the residence time chamber (24) of the line (23) comprises one portion which is made in one piece with the feed line (23) and means for heating said portion (not represented). The residence time chamber could also be done from a separate piece, and with a different material than the line; for instance metal such as stainless steel could be used for the chamber, while the line could be in polyamide.
Said means for heating is an electrical heater (not represented) which converts electricity into heat through the process of resistive heating.

As illustrated, the residence time chamber (24) of the line (23) comprises a line with several loops coiled around the exhaust line (22). The lines in the loops may be round or flattened.

Said residence time chamber (24) is composed by a material adapted to absorb heat generated and transferred by the exhaust system (22) once it is operating (the external environment of the line) by heat transfer means (not represented). Said chamber (24) is arranged such it is thermally coupled to said exhaust line (22).

Thus, during its passage into said chamber (24), ammonia solution is heated and reaches a sufficient temperature to dissolve all the precipitates contained inside. Ammonia solution exempt of precipitates is then injected by the injector (31) to the exhaust line (22). Thus a reliable NOx reduction process is ensured.

The residence time chamber (24) can also be thermally coupled with an ammonia-hydrogen conversion reformer (not represented) that subsequently communicates with a hydrogen fuel cell (not represented) where the hydrogen is then converted into a power source.

The residence time chamber (24) can also be thermally coupled with a reformer (not represented), which is a consuming unit working typically above 200°C.

The residence time chamber (24) can also be thermally coupled with an ammonia fuel cell (not represented).

Figure 2b illustrates a section of the residence time chamber (24) forming loops coiled around the consuming unit (22). The line (23) is flattened and linked by metal connectors (32) acting as fins. The flat shape facilitates the heat diffusion through the line (23) and the metal connector (32) absorbs and transfers the heat from the exhaust line (22) to said residence time chamber (24).

Additionally said residence time chamber (24) can be covered by a metal sheet (33) or an insulating layer that prevents heat losses towards the external environment. The loops and fins can be conveniently made in one part to which the line is connected upstream and the injector (31) downstream.

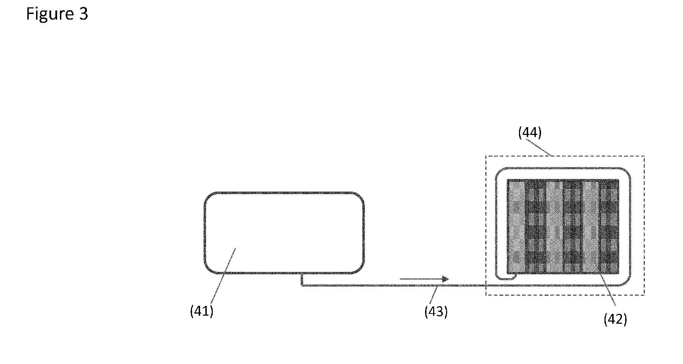

Figure 3 illustrates an embodiment of a system for feeding a Solid Oxide Fuel Cell (42) (e.g. consuming unit).

Converted ammonia precursor is stored in a tank (41) (or an intermediate buffer part of a more complex process). The ammonia solution is sent by an Ammonia Solution Transfer Device (not represented) through a line (43) to the SOFC (42), operating at high temperature, above 400°C. The line coming from the tank (41) to the inlet of the SOFC (42) first makes loops (i.e. a residence time chamber) (44) around the SOFC, thus the solution is heated up and ammonia salts contained in the solution are dissolved or their formation is prevented.

Other benefits can be achieved if more heat exchange from the SOFC to the converted solution is achieved, resulting in temperatures above 80°C: elimination of residual urea, vaporization and pressurization, generation of a flow of vapor towards the inlet of the SO FC.

## Claims

1. A feed line system comprising a line adapted to convey ammonia solution stored in a container mountable on a vehicle to a vehicle consuming unit, wherein said line comprises at least one residence time chamber arranged between the container and the vehicle consuming unit, said residence time chamber being arranged to be in thermal communication with a heat source on-board the vehicle and being configured such that the heat source has sufficient time to act on ammonia salts or to prevent formation of ammonia salts in the ammonia solution.

2. Feed line system according to the preceding claim, wherein said residence time chamber is made in one piece with the line.

3. Feed line system according to claim 1 or 2, wherein said residence time chamber has an enlarged cross section compared to the remainder of the line.

4. Feed line system according to any one of claims 1-3, wherein said residence time chamber is a tortuous pathway.

5. Feed line system according to any one of claims 1-4, wherein said residence time chamber has a coil or loop shape.

6. Feed line system according to any one of claims 1-5, wherein said residence time chamber comprises a wall made of a material adapted to absorb heat present in the external environment of said line.

7. Feed line system according to any one of claims 1-6, wherein said heat source is an electrical heater.

8. Feed line system according to any one of claims 1-6, wherein said heat source is the vehicle consuming unit.

9. Feed line system according to any one of claims 1-8, wherein it comprises heat transfer means configured to transfer heat present in the external environment of said line to said residence time chamber.

10. Feed line system according to any one of claims 1-9, wherein said line is made of thermoplastic, preferably polyamide.

11. Feed line system according to claim 10 wherein said residence time chamber is made of metal, preferably stainless steel.

12. Feed line system according to any one of claims 1-9, wherein said line is made of metal, preferably stainless steel.

13. Feed line system according to any one of claims 1-12, wherein said vehicle consuming unit is selected from the following group: an exhaust line, an ammonia fuel cell, an ammonia hydrogen conversion reformer and a solid oxide fuel cell.
